(19) Europäisches Patentamt

European Patent Office

Office européen des brevets

(11) **EP 1 153 337 B1**

(12) **EUROPÄISCHE PATENTSCHRIFT**

(45) Veröffentlichungstag und Bekanntmachung des Hinweises auf die Patenterteilung:
**15.01.2003   Patentblatt 2003/03**

(51) Int Cl.$^7$: **G05B 11/18**, G05B 11/42, G05B 13/02

(21) Anmeldenummer: **00910540.4**

(22) Anmeldetag: **18.02.2000**

(86) Internationale Anmeldenummer:
**PCT/DE00/00466**

(87) Internationale Veröffentlichungsnummer:
**WO 00/049472 (24.08.2000 Gazette 2000/34)**

(54) **SCHRITTREGLER**

STEP REGULATOR

REGULATEUR NON LINEAIRE

(84) Benannte Vertragsstaaten:
**AT CH DE ES FR GB LI**

(30) Priorität: **19.02.1999   DE 29903016 U**

(43) Veröffentlichungstag der Anmeldung:
**14.11.2001   Patentblatt 2001/46**

(73) Patentinhaber: **SIEMENS AKTIENGESELLSCHAFT**
**80333 München (DE)**

(72) Erfinder:
• **KIRCHBERG, Karl-Heinz**
  **D-76149 Karlsruhe (DE)**
• **MOHR, Dieter**
  **D-75053 Gondelsheim (DE)**

(56) Entgegenhaltungen:
**EP-A- 0 299 321          DE-A- 4 004 183**
**DE-C- 3 634 050          US-A- 5 384 526**

## Beschreibung

Die Erfindung betrifft einen Schrittregler nach dem Oberbegriff des Anspruchs 1.

Ein derartiger Schrittregler ist bereits aus der

DE 40 04 183 A1 bekannt. Der Schrittregler weist einen Dreipunktschalter mit einer Ansprechschwelle und einer Hysterese auf, der über eine einen Integrator enthaltende Rückführung gegengekoppelt ist. Zur Realisierung eines PI-Verhaltens des Reglers wird eine Regeldifferenz als.Eingangssignal nach einer Multiplikation mit einem Faktor Kp als Proportionalanteil einerseits direkt und andererseits zur Bildung eines Integralanteils über einen einen Integrator enthaltenden Parallelzweig dem Dreipunktschalter zugeführt. Im Integrator wird das Eingangssignal nur während der Pausen des Ausgangssignals des Dreipunktschalters, d. h. während der Pausen der ausgegebenen Stellimpulse, aufintegriert. Dadurch wird in vorteilhafter Weise ein lineares Verhalten des P-Anteils über den Stellbereich erreicht. Der Schrittregler besitzt nur eine geringe Abhängigkeit der wirksamen Reglerparameter vom Reglereingangssignal. Daher können die Reglerparameter des Schrittreglers wie bei einem linearen Regler optimiert werden, so daß der Schrittregler als selbstadaptierender Regler verwendet werden kann. Zur Adaption des Reglers an einen Prozeß kann beispielsweise eine sprungförmige Anregung an den Prozeß angelegt und die Sprungantwort des Prozesses ausgewertet werden. Anhand der Sprungantwort können ein geeignetes Prozeßmodell und dessen Parameter berechnet und für den so identifizierten Prozeß die Parameter eines linearen Reglers nach dem Betragsoptimum ermittelt werden. Weiterhin wird bei dem bekannten Schrittregler eine spezielle Adaption der Ansprechschwelle des Dreipunktschalters verwendet, um die Schalthäufigkeit zur Minimierung des Stellgliedverschleißes zu verringern. Bei dieser Adaption verlängert sich die Dauer der Stellimpulse mit der Größe der Anregung.

Aufgrund eines dennoch verbleibenden nichtlinearen Verhaltens des bekannten Schrittreglers unterscheiden sich die Reglerparameter, die am Regler nach der Parameteroptimierung eingestellt wurden, von den Reglerparametern, die bei Betrieb des Schrittreglers letztlich wirksam werden. Das kann dazu führen, daß das Einschwingverhalten des Reglers sich mit der Größe einer Anregung verändert. Weiterhin vergrößert sich die Anzahl der Stellimpulse mit wachsender Anregung und damit auch wieder der Verschleiß am Stellglied.

Der Erfindung liegt die Aufgabe zugrunde, einen Schrittregler zu schaffen, bei dem das Regelverhalten weiter verbessert wird.

Zur Lösung dieser Aufgabe weist der neue Schrittregler der eingangs genannten Art die im kennzeichnenden Teil des Anspruchs 1 angegebenen Merkmale auf. In den Unteransprüchen sind vorteilhafte Weiterbildungen beschrieben.

Durch die Verwendung eines Korrekturglieds, das die Nachstellzeit des Reglers in Abhängigkeit der Regeldifferenz als Eingangssignal verringert, so daß bei größerem Eingangssignal eine kürzere Nachstellzeit eingestellt wird, wird eine bessere Annäherung des Reglerverhaltens an das Verhalten eines linearen Reglers erreicht. Die Erfindung beruht auf der Erkenntnis, daß die wirksame Nachstellzeit bei dem bekannten Schrittregler mit wachsender Anregung größer wurde. Lediglich die Reglerverstärkung war unabhängig von der Anregung. D. h., bei großen Regelabweichungen verhielt sich der Schrittregler zunächst wie ein P-Regler. Der I-Anteil wurde erst mit geringer werdenden Regeldifferenzen aktiv. Je größer die Anregung wurde, desto langsamer wurde sie ausgeregelt. Bei einer Reglereinstellung nach dem Betragsoptimum und bei kleinen Sollwertsprüngen gab es noch ein Überschwingen der Regelgröße, das bei größeren Sollwertsprüngen immer weiter zurückging. Wurde der Regler so eingestellt, daß große Sollwertänderungen aperiodisch eingeregelt wurden, so konnte die Regelgröße bei kleinen Sollwertänderungen dennoch überschwingen. Trotz der bei dem bekannten Schrittregler vorgenommenen Verbesserungen bezüglich der Linearität des P-Anteils war der Regler somit immer noch bezüglich der Nachstellzeit nichtlinear. Dieser Effekt wird durch die Verwendung des Korrekturglieds im neuen Schrittregler kompensiert.

Mit einem Korrekturglied gemäß Anspruch 2 kann der Schrittregler in vorteilhafter Weise ein praktisch ideales, lineares Verhalten erreichen. Beispielsweise können seine Parameter somit derart eingestellt werden, daß bei der Regelung eines linearen Prozesses und einer sprungförmigen Anregung die Stellgröße unabhängig von der jeweiligen Sprunghöhe aperiodisch in einen neuen stationären Endwert eingeregelt wird.

Die korrigierte Nachstellzeit wird aus Sicherheitsgründen auf einen Minimalwert, vorzugsweise das Fünffache der Abtastzeit, begrenzt. Eine Alternative wäre eine Begrenzung auf ein Zehntel der Nachstellzeit Tn.

Wenn die Ansprechschwelle des Dreipunktschalters nur in Abhängigkeit des Proportionalanteils des Reglers eingestellt wird, ist der Schrittregler vorteilhaft auch für Regler mit einem PI-Verhalten, bei welchem die Nachstellzeit sehr groß ist und der I-Anteil damit praktisch vernachlässigbar ist, gut geeignet.

In vorteilhafter Weise kann die Ansprechschwelle im Falle eines konstanten Sollwerts auf die Hälfte des Betrags des Proportionalanteils und im Falle eines sich ändernden Sollwerts auf ein Zwanzigstel des Betrags des Proportionalanteils gesetzt werden. Damit wird ein guter Kompromiß zwischen der Anzahl der Schaltvorgänge und der Regelgüte des Reglers erreicht. Zudem können rampenförmige Sollwertverläufe mit einem derartigen Schrittregler besser nachgefahren werden.

Anhand der Zeichnungen, in denen ein Ausführungsbeispiel der Erfindung dargestellt ist, werden im folgenden die Erfindung sowie Ausgestaltungen und Vorteile näher erläutert.

Figur 1     zeigt ein Blockschaltbild eines Schrittreglers, in

Figur 2     sind beispielhaft Zeitverläufe verschiedener Größen des Reglers dargestellt.

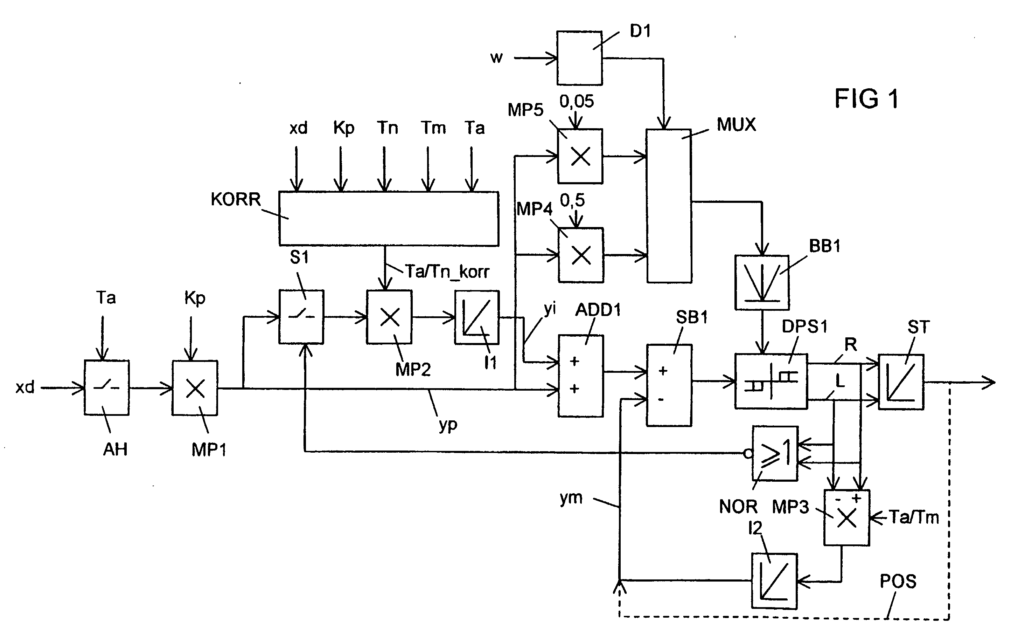

In Figur 1 ist mit AH eine Abtast- und Halteschaltung bezeichnet, die jeweils in zeitlichen Abständen einer Abtastzeit Ta eine Regeldifferenz xd abtastet, während der Abtastzeit speichert und einem Multiplizierer MP1 zuführt. Der Multiplizierer MP1 multipliziert das Ausgangssignal der Abtast- und Halteschaltung AH mit einer Reglerverstärkung Kp. Ein so gebildeter Proportionalanteil yp gelangt einerseits direkt auf einen Addierer ADD1, andererseits wird er über einen Parallelzweig mit einem Schalter S1, einem zweiten Multiplizierer MP2, der ihn mit dem Verhältnis von Abtastzeit Ta zu einer korrigierten Nachstellzeit Tn_korr des Reglers multipliziert, und mit einem Integrierer I1 einem zweiten Eingang des Addierers ADD1 als Integralanteil yi zugeführt. Vom Ausgangssignal des Addierers ADD1 subtrahiert ein Subtrahierer SB2 ein Signal ym, das der Stellung eines Motors als Stellglied ST entspricht. Die mit dem Subtrahierer SB1 gebildete Differenz wird einem Dreipunktschalter DPS1 zugeführt. Dieser hat zwei Schaltpunktpaare mit je einem durch eine Ansprechschwelle bestimmten Einschaltpunkt und mit je einem durch eine Ausschaltschwelle bestimmten Ausschaltpunkt. Die Differenz zwischen Ansprech- und Ausschaltschwelle wird als Hysterese bezeichnet. Das Ausgangssignal des Dreipunktschalters DPS1 hat drei mögliche Zustände, in diesem Ausführungsbeispiel zwei "Ein"-Zustände, je einen für Motorrechts- und Motorlinkslauf, und einen "Aus"-Zustand. Bei Motorrechtslauf wird ein Stellsignal auf eine Leitung R, bei Motorlinkslauf ein Stellsignal auf eine Leitung L ausgegeben. Im "Aus"-Zustand wird kein Stellsignal ausgegeben. Die Leitungen R und L führen zu einem Motor als Stellglied ST, der ein integrierendes Verhalten aufweist. In einem anderen Ausführungsbeispiel, beispielsweise bei einer Heizungsregelung, wäre der Schalter DPS1 durch einen Zweipunktschalter und das Stellglied ST durch eine Heizung zu ersetzen. In ähnlicher Weise ist das Prinzip auch bei einer Mischungsregelung anwendbar.

An die beiden Leitungen R und L ist ferner ein NOR-Glied NOR angeschlossen, das den Schalter S1 steuert. Mit dieser Steuerung wird der Schalter S1 geschlossen, wenn auf keine der beiden Leitungen R und L ein Steilsignal ausgegeben wird. Der Integrierer I1 ist daher nur während der Zeiten wirksam, in denen kein Stellimpuls abgegeben wird.

Das Signal ym am subtrahierenden Eingang des Subtrahierers SB1 entspricht der Position des Stellgliedes ST. Im einfachsten Fall wird ein Stellungsgeber an das Stellglied ST angeschlossen, das dieses Signal über eine gestrichelt gezeichnete Leitung POS liefert. Im Ausführungsbeispiel, in welchem davon ausgegangen wird, daß ein solcher Stellungsgeber nicht vorhanden ist, wird die Position nachgebildet, indem das jeweilige Signal auf den Leitungen R und L mit dem Verhältnis aus Abtastzeit Ta zu einer Stellzeit Tm des Motors als Stellglied ST multipliziert und das Produkt von einem Integrierer I2, dessen Zeitkonstante somit der Stellgliedgeschwindigkeit des Stellgliedes ST entspricht, aufintegriert wird. Die Stellzeit Tm des Stellgliedes ST ist die Zeit, welche dieses benötigt, um von einer Endlage in die andere gefahren zu werden. Das Verhältnis

$$\frac{Ta}{Tm} * 100\%$$

entspricht daher dem Stellweg, den der Stellantrieb in einer Abtastperiode Ta zurücklegt.

Der Stellweg von Anschlag zu Anschlag ist dabei auf 100 % normiert.

Zusammen mit der Rückführung über den Integrator I2 und den Multiplizierer MP3 bzw. über die Leitung POS bildet der Dreipunktschalter DPS1 einen Proportionalregler, da das Stellglied ST bei einer sprungförmigen Änderung des Signals am Summiereingang des Subtrahierers SB1 um einen zu dieser Änderung proportionalen Betrag verfahren wird.

Zur Korrektur der Nachstellzeit dient ein Korrekturglied KORR, das in Abhängigkeit der Reglereingangsgröße xd, der Verstärkung Kp, der gewünschten Nachstellzeit Tn, der Stellzeit Tm sowie der Abtastzeit Ta eine korrigierte Nachstellzeit Tn_korr und damit ein Verhältnis der Abtastzeit Ta zur korrigierten Nachstellzeit Tn_korr ermittelt und auf den Multiplizierer MP2 schaltet. Die korrigierte Nachstellzeit Tn_korr wird berechnet nach der Formel:

Tn_korr = Tn - abs (0.01 * Kp * xd * Tm).

Die Funktion abs entspricht einer Betragsbildung.

Der Dreipunktschalter DPS1 wird mit einer variablen Ansprechschwelle betrieben. Im Falle eines konstanten Sollwerts w wird die Ansprechschwelle durch einen Multiplizierer MP4 und einen Betragsbildner BB1 auf die Hälfte des Betrags des Proportionalanteils yp gesetzt. Ändert sich der Sollwert w, so wird die Ansprechschwelle durch einen Multiplizierer MP5 und den Betragsbildner BB1 zu einem Zwanzigstel des Proportionalanteils yp vorgegeben. Zur Erkennung, ob eine Änderung des Sollwerts w vorliegt, ist ein Änderungsdetektor D1 vorgesehen, der einen Multiplexer MUX in entsprechender Weise steuert.

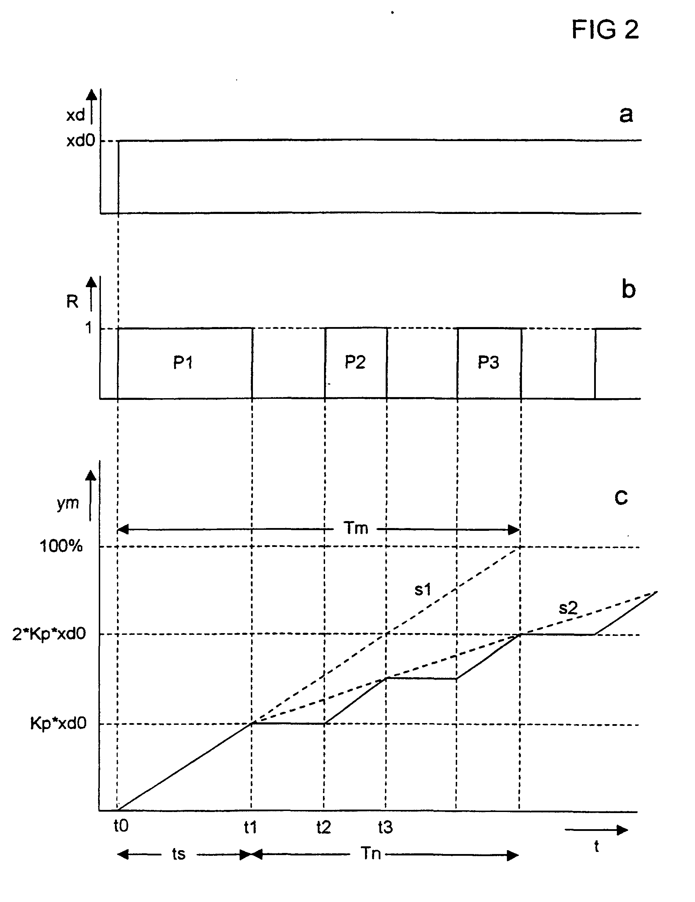

Anhand Figur 2 wird im folgenden die Funktionsweise des Schrittreglers nach Figur 1 und insbesondere die Bedeutung des Korrekturglieds KORB erläutert. Dazu werden Signalverläufe betrachtet, wie sie entstehen würden, wenn das Korrekturglied KORR weggelassen und dem Multiplizierer MP2 unmittelbar das Verhältnis der Abtastzeit Ta zur Nachstellzeit Tn aufgeschaltet werden würde. Der Schrittregler wird aus einem stationären Zustand heraus zu einem Zeitpunkt t0 durch einen Sprung des Eingangssignals xd auf einen Wert xd0 angeregt (siehe Diagramm a). Es wird somit die Sprungantwort des Schrittreglers betrachtet. Demgemäß hat das Signal am Summiereingang des Subtrahierers SB1 und zunächst auch das Eingangssignal des Dreipunktschalters DPS1 den Wert Kp * xd0. Die Ansprechschwelle des Dreipunktschalters DPS1 wird überschritten und dieser gibt als Stellsignal einen ersten Impuls P1 (Diagramm b) auf der Leitung R aus. Das Stellglied ST wird mit konstanter Geschwindigkeit verfahren. Damit steigt das der Position des Stellantriebs entsprechende Signal ym linear an, bis zum Zeitpunkt t1 das Ausgangssignal des Subtrahierers SB1 kleiner als die Abschaltschwelle des Dreipunktschalters DPS1 und der Stellimpuis beendet wird. In Figur 2 ist der Übersichtlichkeit halber die Abschaltschwelle nicht eingezeichnet. Wegen der konstanten Stellgeschwindigkeit des Stellglieds ST ist die Dauer des ersten Stellimpulses P1 und damit der Stellweg proportional zur Größe der Eingangssignaländerung xd0. Der Regler hat daher bis zum Zeitpunkt t1 Proportionalverhalten. Mit dem Ende des ersten Impulses P1 wird der Schalter S1 geschlossen. Das mit dem Faktor

$$\frac{Kp*Ta}{Tn\_korr}$$

multiplizierte Eingangssignal xd0 wird aufintegriert und das Ausgangssignal des Integrators I1 zu dem Proportionalanteil yp = Kp * xd0 addiert. Bei Weglassen des Korrekturglieds KORR entspricht Tn_korr der mit einem Reglerentwurfsverfahren gewonnenen Nachstellzeit Tn. Das Summensignal am Ausgang des Addierers ADD1 steigt langsam an, bis zum Zeitpunkt t2 die Differenz am Ausgang des Subtrahierers SB1 die Ansprechschwelle des Dreipunktschalters DPS1 erreicht und ein zweiter Stellimpuls P2 abgegeben wird. Der Schalter S1 wird geöffnet und der Integralanteil yi bleibt konstant, während das Rückführungssignal ym mit der Positionsänderung des Stellglieds ST ansteigt. Sinkt die Differenz am Eingang des Dreipunktschalters DPS1 unter die Abschaltschwelle, wird der Stellimpuls P2 zum Zeitpunkt t3 beendet, der Schalter S1 geschlossen und die Integration fortgesetzt, bis die Ansprechschwelle des Dreipunktschalters DPS1 wieder überschritten und der nächste Stellimpuls P3 erzeugt wird. Dieses Spiel wiederholt sich, solange der Wert xd0 als Anregung an den Regler angelegt wird. Anhand des gezeigten Signalverlaufs der Motorstellung können eine Gerade mit einer Anfangssteigung s1 der Motorstellung und eine Gerade mit einer Steigung s2 der Motorstellung aufgrund der Folgeimpulse festgelegt werden, die in Diagramm c gestrichelt eingezeichnet sind.

Zur Abkürzung der Schreibweise werden in den folgenden Berechnungen als Hilfsgrößen eingeführt:

ts = t1 - t0 = Dauer des ersten Einschaltimpulses P1,
tp = t2 - t1 = Ausschaltdauer zwischen zwei Folgeimpulsen und
te = t3 - t2 = Einschaltdauer der Folgeimpulse P2, P3, ....

Eine im Schrittregler wirksame Reglerverstärkung Kp_wirk kann anhand der Anfangssteigung s1 bestimmt werden:

$$s1 = \frac{Kp\_wirk*xd}{ts} = \frac{100\%}{Tm}$$

Nach einer Umformung erhält man für Kp_wirk:

$$Kp\_wirk = \frac{100\%}{xd} * \frac{ts}{Tm}$$

Anhand der Steigung s2 kann eine im Schrittregler wirksame Nachstellzeit Tn_wirk berechnet werden. Es gilt:

$$s2 = \frac{\frac{te}{Tm}*100\%}{te+tp} = \frac{100\%}{Tm} * \frac{te}{te+tp} = \frac{100\%}{Tm} * \frac{1}{1+\frac{tp}{te}}$$

Andererseits gilt für einen PI-Regler:

$$s2 = \frac{Kp\_wirk*xd}{Tn\_wirk}$$

Durch Gleichsetzen der letzten beiden Gleichungen erhält man:

$$\frac{Kp\_wirk*xd}{Tn\_wirk} = \frac{100\%}{Tm} * \frac{1}{1+\frac{tp}{te}}$$

Diese Gleichung wird nach Tn_wirk aufgelöst und man erhält:

$$Tn\_wirk = \frac{Kp\_wirk*xd}{100\%} * Tm * (1+\frac{tp}{te})$$

Am Dreipunktschalter wird dann ein Folgeimpuls ausgelöst oder die Ausgabe eines Impulses beendet, wenn sich das Eingangssignal des Dreipunktschalters DPS1 um den Betrag einer Hysterese Xh geändert hat. Dazu muß sich entweder der Integralanteil yi des Reglers oder das Stellungssignal ym des Stellglieds ST um den Wert Xh geändert haben. Daraus kann das Verhältnis von Pausendauer tp zu Einschaltdauer te bestimmt werden. Es gilt:

$$Xh = \frac{te}{Tm}*100\% = \frac{tp}{Tn}*Kp*xd$$

Die Hysterese Xh entspricht der Differenz zwischen Anschalt und Abschaltschwelle des Dreipunktschalters DPS1. Diese Gleichung kann umgeformt werden zu:

$$\frac{tp}{te} = \frac{100\%}{Kp*xd} * \frac{Tn}{Tm}$$

Damit ergibt sich die wirksame Nachstellzeit Tn_wirk zu:

$$Tn\_wirk = \frac{Kp\_wirk*xd}{100\%} * Tm * \left(1 + \frac{100\%}{Kp*xd} * \frac{Tn}{Tm}\right)$$

Da bei der Struktur des Schrittreglers die wirksame Reglerverstärkung Kp_wirk dem eingestellten Wert Kp entspricht, kann diese Gleichung weiter vereinfacht werden zu:

$$Tn\_wirk = Tn + \frac{Kp*xd}{100\%} * Tm$$

Aus dieser Gleichung wird deutlich, daß die wirksame Nachstellzeit Tn_wirk linear mit der Regeldifferenz xd zunimmt. Ursache dafür ist der spezielle Aufbau des Schrittreglers. Der Integrator I1 wird nur während der Impulspausen aktiv, d. h., bei der Ausgabe von Stellimpulsen wird die Integration angehalten. Während der Impulspausen wird also die Regeldifferenz nicht weiter aufintegriert. In diesen Zeiträumen geht Stellenergie verloren. Zudem sorgt der Adaptionsalgorithmus für die Anschaltschwelle dafür, daß sich die Impulsdauer mit der Größe der Regeldifferenz verlängert. Damit wird die Schalthäufigkeit reduziert. Je mehr Stellimpulse ausgegeben werden und je länger diese Impulse dauern, desto schwächer wird der Integralanteil des Reglers. Dieser Zusammenhang wird im Korrekturglied KORR zur Korrektur der vorgegebenen Nachstellzeit Tn des Reglers herangezogen. Die korrigierte Nachstellzeit Tn_korr wird berechnet zu:

$$Tn\_korr = Tn - abs(0.01*Kp*xd*Tm)$$

Die im Regler eingestellte, korrigierte Nachstellzeit wird also in Abhängigkeit von der Regeldifferenz xd verringert, so daß in den Impulspausen stärker integriert wird. Damit wird der Verlust, der durch die fehlende Integration bei der Impulsausgabe verursacht wird, ausgeglichen.

Die Nachstellzeit sollte aber nicht beliebig verringert werden. In der gezeigten Abtastregelung als Ausführungsbeispiel wird sie vorzugsweise nach unten auf den Wert der fünffachen Abtastzeit Ta begrenzt. D. h., wenn die korrigierte Nachstellzeit Tn_korr bei der Berechnung kleiner als das Fünffache der Abtastzeit Ta wird, wird sie im Korrekturglied KORR festgelegt zu Tn_korr = 5 * Ta.

Die verwendete Art der Adaption der Ansprechschwelle im Dreipunktschalter DPS1 hat den Vorteil, daß auch Schrittregler realisiert werden können, deren Struktur als P- oder PD-Regler parametriert wird. Dieser Fall tritt ein, wenn der Parallelzweig durch den Schalter S1 (siehe Figur 1) vollständig abgeschaltet wird. Beispielsweise Niveau- oder Füllstandsregelungen enthalten integrierende Anteile im Verhalten des Prozesses. Für diese Regelungen sind daher Regler mit reiner P- oder PD-Struktur gut geeignet. Auch bei diesen Regelungen kann durch die verwendete Anpassung der Ansprechschwelle der beschriebene Schrittregler eingesetzt werden. Zudem können aufgrund der verwendeten Adaptionsmechanismen auch rampenförmige Verläufe des Sollwerts w mit guter Genauigkeit nachgefahren werden.

Beispielsweise bei der Temperaturregelung von Extrudern oder Temperiermaschinen werden die Parameter eines PID-Reglers häufig für ein gutes Störverhalten ausgelegt. Dazu werden sie schärfer eingestellt, d. h., die Nachstellzeit Tn wird verkürzt. Damit in diesem Fall bei Sollwertsprüngen keine zu großen Überschwinger auftreten, wird der P- oder PD-Anteil des Reglers in die Rückführung gelegt. Auch eine derartige Struktur ist bei dem neuen Schrittregler möglich. Die Auftrennung der Reglerstruktur in einen Zweig zur Bildung eines Proportionalanteils und einen Zweig zur Bildung eines Integralanteils ist somit nicht zwingend erforderlich. Wesentlich ist jedoch, daß die Integration während der Ausgabe von Impulsen abschaltbar ist.

**Patentansprüche**

1. Schrittregler mit PI- oder PID-Verhalten

   - mit einem Stellimpulse abgebenden, eine Ansprechschwelle und eine Hysterese aufweisenden Schalter mit zumindest zwei Zuständen, insbesondere einem Dreipunktschalter (DPS1), der über eine Rückführung gegengekoppelt ist, und
   - mit einem PI- oder PID-Regler mit einem Integrator (I1) zur Bildung eines Integralanteils (yi), wobei die Integration während der Stellimpulse unterbrochen ist,

   **dadurch gekennzeichnet,**

   - **daß** der Integrator (I1) mit einem Korrekturglied (KORR) versehen ist, welches die Nachstellzeit (Tn) in Abhängigkeit eines Eingangssignals (xd) des Reglers verringert, so daß bei größerem Eingangssignal eine kürzere Nachstellzeit (Tn_korr) eingestellt wird.

2. Schrittregler nach Anspruch 1, **dadurch gekennzeichnet, daß** das Korrekturglied (KORR) derart ausgebildet ist, daß die korrigierte Nachstellzeit Tn_korr des Integrators (I1) der Gleichung

$$Tn\_korr = Tn - abs(0.01 * Kp * xd * Tm)$$

   genügt,
   mit

   xd - Eingangssignal des Reglers,
   Tm - maximale Laufzeit eines dem Schalter (DPS1) nachgeschalteten Stellglieds (ST) für ein Durchfahren des vollständigen Stellbereichs und
   Kp, Tn - zumindest näherungsweise die Parameter Verstärkung bzw. Nachstellzeit eines linearen Reglers, der für ein aperiodisches Regeln eines zu regelnden Prozesses optimiert ist.

3. Schrittregler nach Anspruch 2, **dadurch gekennzeichnet, daß** in einer Abtastregelung mit einer Abtastzeit Ta die korrigierte Nachstellzeit Tn_korr auf die fünffache Abtastzeit oder auf ein Zehntel der Nachstellzeit Tn als Minimalwert begrenzt ist.

4. Schrittregler nach einem der vorhergehenden Ansprüche, **dadurch gekennzeichnet, daß** die Ansprechschwelle des Schalters (DPS1) nur in Abhängigkeit des Proportionalanteils (yp) eingestellt wird.

**5.** Schrittregler nach Anspruch 4, **dadurch gekennzeichnet, daß** die Ansprechschwelle im Falle eines konstanten Sollwerts (w) auf die Hälfte des Betrags des Proportionalanteils (yp) und im Falle eines sich ändernden Sollwerts (w) auf ein Zwanzigstel des Betrags des Proportionalanteils (yp) gesetzt wird.

**Claims**

**1.** Step controller with PI or PID behaviour

- with a switch emitting a position pulse, having a response threshold and a hysteresis, with at least two states, in particular a three-point switch (DPS1) which is countercoupled via a feedback, and
- with a PI or PID controller with an integrator (Il) to form an integral part (yi) where the integration is interrupted during the position pulse,

**characterised in that**

- the integrator (I1) has a correction element (KORR) which reduces the reset time (Tn) as a function of an input (xd) of the controller, so that on larger input signals a shorter reset time (Tn_korr) can be set.

**2.** Step controller according to claim 1, **characterised in that** the correction element (KORR) is formed such that the corrected reset time Tn_korr of the integrator (I1) fulfils the equation

$$Tn\_korr = Tn - abs\,(0.01 * Kp * xd * Tm)$$

where

xd - input signal of controller,
Tm - maximum run time of an actuator (ST) connected after the switch (DPS1) for passing through the complete position range and
Kp, Tn - equal at least approximately the parameters amplification and reset time of a linear controller which is optimised for aperiodic control of a process to be regulated.

**3.** Step controller according to claim 2, **characterised in that** in sampling control with a sampling time Ta, the corrected reset time Tn_korr is limited to five times the sampling time or one-tenth of the reset time Tn as a minimum value.

**4.** Step controller according to any of the previous claims, **characterised in that** the response threshold of the switch (DPS1) is set only as a function of the proportional part (yp).

**5.** Step controller according to claim 4, **characterised in that** the response threshold in the case of a constant nominal value (w) is set to half the amount of the proportional part (yp) and in the case of a changing nominal value (w) to one-twentieth of the amount of the proportional part (yp).

**Revendications**

**1.** Régulateur non linéaire avec caractéristique PI ou PID, comportant

- un commutateur délivrant des impulsions de réglage et ayant un seuil de réponse et une hystérésis, notamment un commutateur à trois positions (DPS1), qui est couplé en rétroaction par l'intermédiaire d'une branche de rétroaction, et
- un régulateur PI ou PID ayant un intégrateur (Il) pour la formation d'une composante intégrale (yi), l'intégration étant interrompue pendant les impulsions de réglage,

**caractérisé par le fait que**

- l'intégrateur (I1) est muni d'un élément correcteur (KORR) qui réduit le temps de compensation (Tn) en fonction d'un signal d'entrée (xd) du régulateur de telle sorte qu'un temps de compensation plus court (Tn_korr) est réglé en cas de signal d'entrée plus grand.

2. Régulateur non linéaire selon la revendication 1, **caractérisé par le fait que** l'élément correcteur (KORR) est conçu de telle sorte que le temps de compensation corrigé Tn_korr de l'intégrateur (I1) vérifie l'équation

$$Tn\_korr = Tn - abs(0.01 * Kp * xd * Tm)$$

avec

xd - signal d'entrée du régulateur,

Tm - temps maximal mis par un élément de réglage (ST) branché du côté aval du commutateur (DPS1) pour parcourir toute la plage de réglage et

Kp, Tn - au moins approximativement les paramètres amplification et temps de compensation d'un régulateur linéaire qui est optimisé pour une régulation apériodique d'un processus à réguler.

3. Régulateur non linéaire selon la revendication 2, **caractérisé par le fait que**, dans une régulation à échantillonnage avec un temps d'échantillonnage Ta, le temps de compensation corrigé Tn_korr est limité à une valeur minimale égale à cinq fois le temps d'échantillonnage ou à un dixième du temps de compensation Tn.

4. Régulateur non linéaire selon l'une des revendications précédentes, **caractérisé par le fait que** le seuil de réponse du commutateur (DPS1) est réglé seulement en fonction de la composante proportionnelle (yp).

5. Régulateur non linéaire selon la revendication 4, **caractérisé par le fait que** le seuil de réponse est fixé dans le cas d'une valeur de consigne (w) constante à la moitié de la valeur absolue de la composante proportionnelle (yp) et dans le cas d'une valeur de consigne (w) variable à un vingtième de la valeur absolue de la composante proportionnelle (yp).

FIG 1

FIG 2